# FASCICULE DE BREVET EUROPEEN

(11) **EP 1 856 989 B1**
(45) Date de publication et mention de la délivrance du brevet: **22.07.2009**
(21) Numéro de dépôt: 06300493.1
(22) Date de dépôt: 18.05.2006
(51) Int. Cl.: A23L 3/375, A23P 1/10, F25D 3/12, A23G 9/06

(54) **Utilisation d'un mélange de neige carbonique et d'azote liquide dans des applications de surgélation**
Verwendung einer Mischung aus flüssigem Stickstoff und Kohlendioxid Schaum zur Tiefkühlung
Use of a mix of carbon dioxide snow and liquid nitrogen in deep-freeze applications

(43) Date de publication de la demande: 21.11.2007
(73) Titulaire: L'AIR LIQUIDE, Société Anonyme pour l'Etude et l'Exploitation des Procédés Georges Claude, 75007 Paris (FR)
(72) Inventeur: COUSIN, Franck, 62190, LILLERS (FR); FREDERICK, Willy, 17270, CLERAC (FR); FACHON, Nicolas, 62200, BOULOGNE SUR MER (FR)
(74) Mandataire: Mellul-Bendelac, Sylvie Lisette

(56) Documents cités:
- EP-A- 0 857 561
- EP-A- 1 442 873
- US-A- 3 685 308
- US-A- 4 631 250
- US-A- 6 079 215
- US-B1- 6 183 795
- US-B1- 6 279 328

## Description

L'invention concerne le domaine du transfert thermique entre un fluide cryogénique et un produit à refroidir, notamment un produit alimentaire, et les moyens d'améliorer un tel transfert.

Des procédés de refroidissement par contact avec un fluide cryogénique sont par exemple décrits dans US 6 079 215 et US 6 279 328.

Comme on le verra ci-dessous plus en détail, on propose selon la présente invention l'utilisation d'un mélange ou « potion » (ou "bouillie") cryogénique, constitué(e) d'un mélange de neige carbonique CO₂ et d'azote liquide, permettant l'obtention d'un liquide plus ou moins laiteux présentant une certaine viscosité que l'on peut ajuster et une capacité frigorifique bien plus élevée.

Cette solution permet en effet, comme on le verra, d'augmenter le transfert thermique par contact, de disposer d'une puissance frigorifique plus élevée.

On a évoqué ci-dessus l'exemple d'une application agroalimentaire, mais plus largement cette solution peut être utilisée à toutes les étapes de procédés demandant un refroidissement rapide par contact, tel l'agroalimentaire, l'emmanchement cryogénique de pièces mécaniques ; la surgélation des sols, le refroidissement rapide de produits chauds comme c'est le cas en cimenterie etc ...

La préparation d'une telle solution peut se faire par exemple au moyen d'une cuve, munie ou non d'une vis de mélange, dans laquelle on verse l'azote liquide, puis à l'aide d'un tromblon on vient déposer la neige carbonique sur la surface de l'azote, et l'on procède ensuite au mélange (mais spontanément l'ensemble se met à « bouillir » réalisant le mélange), mais l'on peut utiliser également une injection du CO₂ dans la partie basse d'une cuve contenant l'azote liquide, ce qui permet d'améliorer sensiblement la mise en solution.

La mise en solution du CO₂ doit se faire sous une agitation qui sera fonction de la quantité de CO₂ que l'on souhaite dissoudre dans l'azote liquide.

Il est possible d'envisager, d'un point de vue industriel, une cuve alimentée par les deux réservoirs sources (azote liquide et CO₂), cette cuve étant équipée d'un agitateur avec avantageusement un variateur de vitesse permettant la suspension du CO₂ dans l'azote quelle que soit la concentration envisagée. Cette cuve constitue donc un stockage provisoire de mélange, à partir de laquelle on alimente le poste utilisateur final.

Mais on peut également envisager un mélange en ligne (dans la tuyauterie) et éviter ainsi un stockage intermédiaire.

Il faut noter que la concentration de la neige carbonique dans l'azote liquide fait varier la conductivité du mélange, le CO₂ est en effet une molécule polaire. Une mesure de la variation de conductivité du milieu sera donc indicative d'une variation de la quantité de CO₂ en suspension dans le mélange.

Il est donc envisageable de mettre en place une régulation sur le mode suivant : une sonde de mesure de conductivité du mélange peut être reliée au moteur de l'agitation ou à son variateur de fréquence et donc agiter plus ou moins vite le mélange en fonction de la concentration souhaitée.

L'invention concerne alors un procédé de refroidissement d'un produit, du genre où tout ou partie du refroidissement est réalisé par contact du produit avec un fluide cryogénique, et se caractérisant en ce que le fluide cryogénique est un mélange de neige carbonique (CO₂) et d'azote liquide.

On procède donc ainsi, en quelque sorte, au sous-refroidissement du CO₂ pour lui permettre d'atteindre une puissance frigorifique plus élevée, en le faisant passer d'une température voisine de -80°C à une température voisine de -196°C.

La quantité d'azote liquide ajoutée permet d'ajuster la viscosité de l'espèce de « bouillie » qui est obtenue, afin, selon les applications envisagées, de pouvoir optimiser le temps de contact avec le produit à refroidir : on conçoit en effet qu'en mettant en contact le produit avec un mélange visqueux, on va pouvoir obtenir des temps de contacts plus élevés, des rendements frigorifiques améliorés. Selon les applications envisagées on adoptera préférentiellement une teneur en neige dans la solution comprise entre 5% et 80%.

Typiquement quand on met en contact le produit avec de l'azote liquide seul, on observe le fait qu'un croutage du produit se fait presque immédiatement, empêchant ensuite le transfert de frigories (phénomène de caléfaction i.e création d'une couche de gaz autour du produit, faisant office d'isolant).

En mettant en contact le produit avec de la neige carbonique seule on n'observe certes aucun phénomène de caléfaction autour du produit, mais en revanche, vu la température de la neige (voisine de -80°C) on peut considérer que la puissance frigorifique disponible est limitée.

En revanche, en mettant en contact le produit avec une solution de neige carbonique et d'azote liquide conforme à l'invention, on observe une nette diminution du phénomène de caléfaction et par ailleurs la capacité de refroidissement est importante car le temps de contact entre le mélange et le produit est augmenté du fait de la viscosité du mélange, la température à coeur du produit décroît rapidement, le transfert thermique est optimisé.

D'autres caractéristiques et avantages ressortiront de la description suivante d'essais de mise en oeuvre de l'invention.

Afin de démontrer dans un premier temps simplement l'amélioration sensible selon l'invention du transfert thermique (en l'occurrence de frigories) au produit on a tout d'abord procédé aux essais très simples suivants sur des steaks hachés du commerce (15% de matière grasse) :
- on a préparé un mélange de neige carbonique et d'azote liquide conforme à l'invention selon la méthode décrite ci-dessus (incorporation de CO₂ jusqu'à obtenir une gamme de 15 à 30 % de CO₂, et une température d'environ -190 °C);
- on disposait également d'un bain témoin d'azote liquide seul ;
- la température initiale des steaks hachés était de +3°C ;
- on observe alors les résultats suivants :
   a) Après 15 secondes d'immersion des steaks dans l'azote liquide, leur température à coeur n'a toujours pas baissé.
   b) Après 15 secondes d'immersion des steaks dans la solution cryogénique conforme à l'invention, leur température à coeur a baissé de 3°C.

Ces essais ont été reproduits à plusieurs reprises, dans les mêmes conditions opératoires, et à l'aide de la même sonde de température, donnant lieu aux mêmes résultats.

Afin de démontrer les performances obtenues selon l'invention on a également procédé à des essais de surgélation de produits alimentaires individuels, traditionnellement réalisée dans des moules métalliques ou polymères adaptés (par exemple confiseries ou crèmes glacées individuelles sous la forme de petits personnages).

Pour cela on a procédé aux étapes suivantes :

### - Création du moule :

On a préparé un mélange de neige carbonique et d'azote liquide conforme à l'invention selon la méthode décrite ci-dessus (incorporation de CO₂ jusqu'à obtenir une gamme de 40 à 60 % de CO₂), afin d'obtenir une pâte « formable », dont la température initiale est d'environ -190°C.

Cette pâte cryogénique est alors déposée sur un plateau à bords, la surface en est lissée, et afin de créer des moules de formes voulues (par exemple des petits personnages) on crée dans la pâte des empreintes en pressant puis retirant des moules adaptés.

### - Dépose du produit alimentaire à surgeler :

Le produit à surgeler (par exemple une crème glacée) est alors coulé dans les empreintes. Le figeage des dépôts dans un premier temps, puis leur surgélation dans un second temps est rapide, par contact avec la bouillie cryogénique formant les empreintes en question.

Le démoulage se fait alors naturellement, sans soucis, sans attacher, sans déformation du personnage, tout simplement par la sublimation de la neige carbonique et la vaporisation de l'azote.

On le voit bien une telle méthode permet alors l'obtention de produits habituellement très délicats à obtenir, de petite taille, de forme très variable, dans des conditions sanitaires exceptionnelles puisqu'il n'y a aucun contact entre le produit à surgeler et une surface de moule métal ou polymère potentiellement souillée.

En résumé, les avantages de l'invention peuvent être récapitulés ainsi :
- l'utilisation d'une telle solution est compatible avec les installations existantes sans nécessité de modifications (et par exemple en alimentaire : tunnels, barrâtes, surgélateurs par immersion etc......) ;
- avec tous les types de produits et notamment les plus difficiles à obtenir tels les produits individuels, les produits portionnables en sachets etc.....
- le temps de contact est amélioré, par une meilleure adhésion de la "bouillie" sur le produit, la puissance frigorifique augmentée, le rendement de l'installation amélioré (on peut avancer le fait que l'on peut faire passer dans une installation existante fonctionnant habituellement sous azote liquide ou CO₂ liquide 2 à 3 fois plus de produits par unité de temps).

## Revendications

1. Procédé de refroidissement d'un produit, tout ou partie du refroidissement étant réalisé par contact du produit avec un fluide cryogénique, **caractérisé en ce que** le fluide cryogénique est un mélange de neige carbonique (CO₂) et d'azote liquide.

2. Procédé de refroidissement d'un produit selon la revendication 1, **caractérisé en ce que** la quantité de CO₂ dans le mélange est régulée à partir d'une mesure de la conductivité du mélange, en agissant, en fonction du résultat de cette mesure, sur la vitesse d'agitation du mélange.

3. Procédé de refroidissement d'un produit selon la revendication 1 ou 2, **caractérisé en ce que** le produit ainsi refroidi est un produit alimentaire.

## Claims

1. Process for chilling a product, all or some of the chilling being carried out by contact of the product with a cryogenic fluid, **characterized in that** the cryogenic fluid is a mixture of carbon dioxide snow (CO₂) and liquid nitrogen.

2. Process for chilling a product according to Claim 1, **characterized in that** the amount of CO₂ in the mixture is controlled from a measurement of the conductivity of the mixture, by acting, as a function of the result of this measurement, on the stirring rate of the mixture.

3. Process for chilling a product according to Claim 1 or 2, **characterized in that** the product thus chilled is a food product.

## Patentansprüche

1. Kühlverfahren für ein Produkt, wobei das Kühlen ganz oder teilweise durch Kontakt des Produkts mit einem kryogenen Fluid erfolgt, **dadurch gekennzeichnet, dass** das kryogene Fluid ein Gemisch aus Trockeneis (CO₂) und Flüssigstickstoff ist.

2. Kühlverfahren für ein Produkt nach Anspruch 1, **dadurch gekennzeichnet, dass** die Menge an CO₂ in dem Gemisch ausgehend von einer Messung der Leitfähigkeit des Gemischs reguliert wird, indem man in Abhängigkeit von dem Ergebnis dieser Messung auf die Rührgeschwindigkeit des Gemischs einwirkt.

3. Kühlverfahren für ein Produkt nach Anspruch 1 oder 2, **dadurch gekennzeichnet, dass** das derart abgekühlte Produkt ein Nahrungsmittel ist.
